# FASCICULE DE BREVET EUROPEEN

(11) **EP 0 722 050 B1**
(45) Date de publication et mention de la délivrance du brevet: **08.12.1999**
(21) Numéro de dépôt: 96400059.0
(22) Date de dépôt: 10.01.1996
(51) Int. Cl.: F16D 65/092

(54) **Garniture de frein, notamment pour véhicule ferroviaire**
Bremsbelag, insbesondere für Eisenbahnfahrzeuge
Brake lining, in particular for railway vehicles

(30) Priorité: 11.01.1995 FR 9500250
(43) Date de publication de la demande: 17.07.1996
(73) Titulaire: USINES DEHOUSSE, 64000 Pau (FR)
(72) Inventeur: Falanchere, Didier, F-64290 Gan (FR)
(74) Mandataire: CABINET BONNET-THIRION

(56) Documents cités:
- EP-A- 0 615 074
- EP-A- 0 624 735
- DE-U- 9 201 709
- US-A- 2 904 138

## Description

La présente invention concerne d'une manière générale les garnitures de frein du type de celles mises en oeuvre par exemple pour l'équipement de véhicules ferroviaires.

Elle vise plus particulièrement celles de ces garnitures de frein qui comportent au moins un plot de friction, et, en pratique, plusieurs plots de friction, présentant à leur base une collerette de retenue par laquelle ils sont pris entre deux plaques formant conjointement un support pour l'ensemble, à savoir, une plaque supérieure, qui présente, pour leur passage, des ouvertures de dimensions inférieures à celles de leur collerette de retenue, et une plaque inférieure, qui les contrebute au moins localement, et qui, en pratique, sensiblement parallèle à la plaque supérieure, est dûment solidaire de celle-ci.

Une garniture de frein de ce type se trouve notamment décrite dans la demande de brevet européen No 0 615 074.

Lorsque les plots de friction sont des plots cylindriques présentant une section transversale circulaire, il est nécessaire de leur associer des moyens de blocage, pour les bloquer en rotation sur l'une et/ou l'autre des plaques formant leur support.

Dans la demande de brevet européen No 0 615 074, ces moyens de blocage mettent à contribution leur collerette de retenue.

Pour ce faire, cette collerette de retenue est fractionnée en secteurs circulaires dont l'une et/ou l'autre des plaques viennent épouser la forme, cette ou ces plaques étant dûment déformées à cet effet autour de leurs ouvertures.

Cette disposition conduit en pratique à une réalisation relativement complexe, et donc coûteuse.

Mais, en combinant en fait deux types de moyens de blocage en rotation intéressant l'un et l'autre la collerette de retenue des plots de friction, à savoir des moyens dus à une coopération de forme entre cette collerette de retenue et l'une et/ou l'autre des plaques qui l'enserrent, et des moyens dus par ailleurs précisément au serrage exercé par ces plaques, cette disposition a, en outre, et surtout, pour inconvénient de soumettre en fonctionnement cette collerette de retenue à des efforts importants, sous les effets des forces de frottement alors encaissées par le plot de friction auquel elle appartient.

Il en résulte, peu à peu, le développement d'un jeu de rotation non négligeable d'un tel plot de friction par rapport aux plaques, avec, pour conséquences, une absence de serrage de ce plot de friction entre ces plaques et une usure accentuée des faces supérieure et inférieure de la collerette de retenue, ces deux effets se conjuguant pour nuire à l'efficacité du plot de friction, en conduisant à une usure irrégulière de celui-ci, et pour accélérer, finalement, sa destruction.

Dans le brevet américain No 2 904 138, les moyens de blocage en rotation nécessaires résultent de ce que les plots de friction ont, en section transversale, un contour polygonal, et de ce que, de manière complémentaire, il en est de même pour les ouvertures des plaques.

Ainsi, ces moyens de blocage sont dissociés de la collerette de retenue des plots de friction.

Mais, il en résulte une relative complexité de réalisation et de montage pour l'ensemble, et il y a en outre le risque d'un cisaillement des plots de friction par la plaque supérieure.

La présente invention a d'une manière générale pour objet une disposition permettant d'éviter ces inconvénients.

De manière plus précise, elle a pour objet une garniture de frein du genre comportant au moins un plot de friction présentant à sa base une collerette de retenue par laquelle il est pris entre deux plaques formant conjointement son support, à savoir une plaque supérieure, qui présente pour son passage une ouverture de dimensions inférieures à celles de sa collerette de retenue, et une plaque inférieure qui, au moins localement, le contrebute, avec, associés à ce plot de friction, des moyens de blocage qui, dissociés de la collerette de retenue, le bloquent en rotation sur l'une au moins de ces plaques, cette garniture de frein étant d'une manière générale caractérisée en ce que les moyens de blocage du plot de friction sont solidaires de la plaque inférieure, ces moyens de blocage comportant au moins une languette qui, en saillie sur cette plaque inférieure, en venant par exemple d'un seul tenant de celle-ci à la faveur d'un crevé, est engagée dans un évidement prévu à cet effet, en creux, et en position excentrée, sur la surface inférieure du plot de friction.

Ainsi, la collerette de retenue est avantageusement ménagée, et il n'y a pas de risque de cisaillement du plot de friction.

En outre, la plaque supérieure peut, si désiré, être totalement plane, et, abstraction faite des languettes qu'elle forme, il en est conjointement avantageusement de même de la plaque inférieure.

Il en résulte, globalement, une réalisation qui, tout en étant particulièrement robuste, est avantageusement simple et relativement bon marché.

Suivant un développement de l'invention, la hauteur de l'évidement que présente le plot de friction pour l'engagement de la languette assurant son blocage en rotation est supérieure à la somme de la hauteur de sa collerette de retenue et de l'épaisseur de la plaque supérieure.

Il en résulte que lorsque, après usure, le plot de friction se trouve arasé à un niveau suffisant, choisi pour être légèrement supérieur à celui de la plaque supérieure, cet évidement se trouve démasqué et constitue dès lors un témoin d'usure signalant, à vue, que les plots de friction, ou l'ensemble de la garniture de frein, doivent être changés.

Il est ainsi avantageusement tiré un parti supplémentaire des moyens de blocage prévus suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en plan d'une garniture de frein suivant l'invention ;
la figure 2 en est, à échelle supérieure, une vue en coupe transversale, suivant la ligne II-II de la figure 1 ;
la figure 3 est une vue en coupe transversale qui, reprenant pour partie celle de la figure 2, montre, pour l'un des plots de friction, l'usure éventuelle d'un tel plot de friction ;
la figure 4 est une vue en coupe transversale qui, reprenant elle aussi pour partie celle de la figure 2, se rapporte à une variante de réalisation ;
la figure 5 est une vue partielle en plan, qui, analogue à celle de la figure 1, se rapporte à une autre variante de réalisation ;
la figure 6 est une vue partielle en coupe transversale de cette variante de réalisation, suivant la ligne VI-VI de la figure 5.

Tel qu'illustré sur ces figures, et de manière connue en soi, la garniture de frein 10 suivant l'invention, qui s'étend globalement suivant un secteur circulaire, et qui est destinée à être disposée côte à côte avec une garniture de frein 10 de même type, pour application à un même disque de frein non représenté, comporte, globalement, en saillie, au moins un plot de friction 11 en matériau de frottement, et, par exemple, en matériau de frottement fritté.

En pratique, plusieurs plots de friction 11 sont prévus, à distance les uns des autres, en étant dûment répartis sur l'ensemble de la surface de la garniture de frein 10.

Tous identiques entre eux, ces plots de friction 11, globalement cylindriques, ont, dans la forme de réalisation représentée, une section transversale circulaire.

Ils présentent, en saillie, à leur base, une collerette de retenue 12, par laquelle ils sont chacun individuellement pris entre deux plaques 13A, 13B formant conjointement un support 13 commun à l'ensemble, à savoir, d'une part, une plaque 13A supérieure, qui, pour leur passage, présente des ouvertures 14 de dimensions inférieures à celles de leur collerette de retenue 12, et, donc, de diamètre inférieur à celui de celle-ci, et, d'autre part, une plaque 13B inférieure, qui les contrebute, au moins localement, et qui, sensiblement parallèle à la plaque 13A supérieure, est, suivant des dispositions décrites plus en détail ultérieurement, dûment solidaire de cette plaque 13A supérieure.

A chacun des plots de friction 11 sont associés des moyens de blocage qui les bloquent en rotation sur l'une et/ou l'autre des plaques 13A, 13B.

Suivant l'invention, pour l'un au moins de ces plots de friction 11, et, en pratique, pour chacun de ceux-ci, ces moyens de blocage sont dissociés de la collerette de retenue 12, en sorte que, au moins autour des ouvertures 14 qu'elle présente pour le passage des plots de friction 11, la plaque 13A supérieure est plane.

Plus précisément, les moyens de blocage des plots de friction 11 sont, suivant l'invention, solidaires de la plaque 13B inférieure.

Plus précisément encore, ils comportent, dans les formes de réalisation représentées, pour chacun des plots de friction 11, au moins une languette 15, qui, en saillie sur la plaque 13B inférieure, est engagée dans un évidement 16 prévu à cet effet, en creux, et en position excentrée, sur la surface inférieure 17 de ce plot de friction 11.

En pratique, également, il n'intervient, dans ces formes de réalisation, qu'une languette 15 pour chacun des plots de friction 11.

Formée à la faveur d'un crevé 18 de la plaque 13B inférieure, cette languette 15 est d'un seul tenant avec celle-ci.

Du fait que les moyens de blocage associés à un plot de friction 11 sont ainsi dissociés de la collerette de retenue 12 de ce plot de friction 11, cette collerette de retenue 12 est avantageusement, suivant l'invention, circulairement continue et de hauteur constante tout au long de son contour.

Soit H1 sa hauteur.

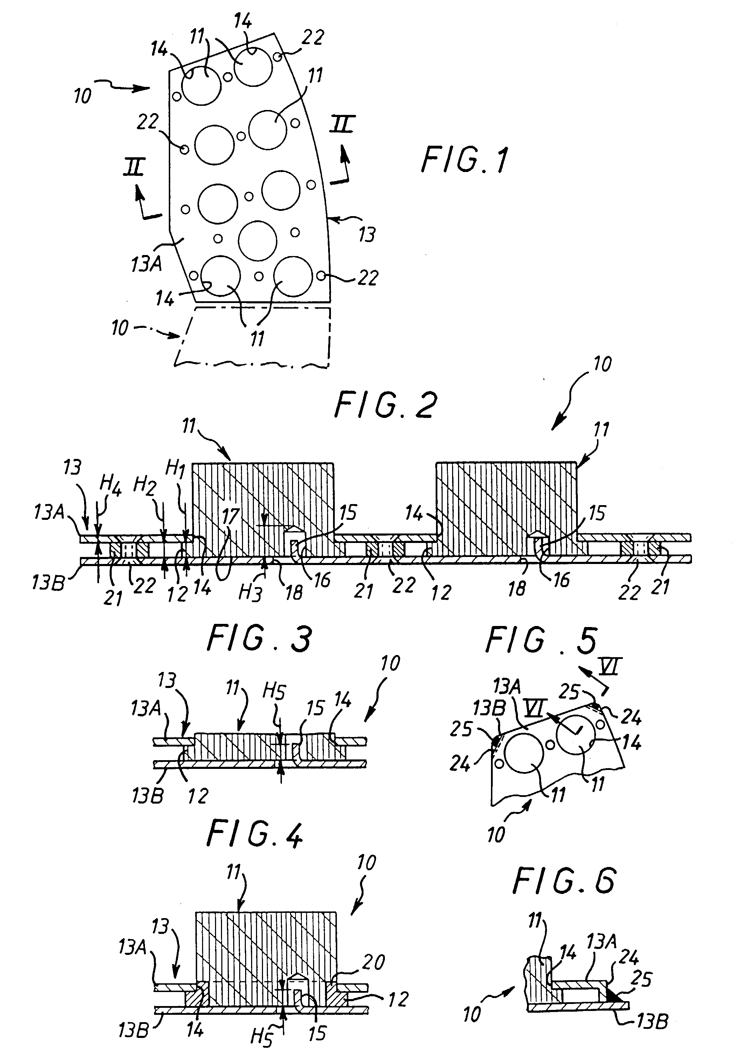

Dans la forme de réalisation plus particulièrement représentée sur les figures 1 à 3, la collerette de retenue 12 d'un plot de friction 11 est d'un seul tenant avec celui-ci.

Autrement dit, chaque plot de friction 11 forme, suivant l'invention, un ensemble monobloc avec la collerette de retenue 12.

En variante, et tel que représenté à la figure 4, la collerette de retenue 12 peut cependant appartenir à une bague 20 qui, distincte du plot de friction 11, est dûment solidaire de celui-ci, en l'enserrant à sa base.

Quoi qu'il en soit, les dimensions des ouvertures 14 de la plaque 13A supérieure correspondent préférentiellement au plus près à celles des plots de friction 11, pour un engagement plus ou moins serré sur ceux-ci de nature à en éviter un jeu latéral en service.

Dans les formes de réalisation représentées, la plaque 13A supérieure est en pratique plane en tout point de sa surface.

Abstraction faite des languettes 15 qu'elle forme, il en est de même pour la plaque 13B inférieure.

En outre, dans ces formes de réalisation, ces deux plaques 13A, 13B sont de place en place reliées l'une à l'autre par des rivets 21 dont chacun est entouré par une douille entretoise 22 de hauteur H2 sensiblement égale à celle H1 de la collerette de retenue 12 des plots de friction 11 tout en étant légèrement inférieure à celle-ci.

Ainsi, si la collerette de retenue 12 des plots de friction 11 se trouve légèrement pincée entre les plaques 13A, 13B, ce qui évite un jeu axial en service, ce pincement se trouve dûment contrôlé par les douilles entretoises 22.

Quoi qu'il en soit, ce pincement n'intervient avantageusement en rien dans le blocage en rotation des plots de friction 11.

Quoi qu'il en soit, également, il n'intervient avantageusement pas non plus de brasage ou de soudage entre ces plots de friction 11 et l'une et/ou l'autre des plaques 13A, 13B pour ce blocage en rotation.

Enfin, dans les formes de réalisation représentées, la hauteur H3 de l'évidement 16 des plots de friction 11 à compter de la surface inférieure 17 de ceux-ci est supérieure à la somme de la hauteur H1 de la collerette de retenue 12 de ces plots de friction 11 et de l'épaisseur H4 de la plaque 13A supérieure.

Ainsi, après usure, et tel que représenté à la figure 3, cet évidement 16 devient apparent, en formant ainsi un témoin d'usure, et en laissant à vue la languette 15 qui y est engagée.

Bien entendu, la hauteur H5 de cette languette 15 est inférieure à celle, H3, de l'évidement 16.

Bien entendu, également, la plaque inférieure 13B est normalement équipée, de manière connue en soi, sur sa surface inférieure d'une patte de fixation, non représentée, propre à permettre l'assujettissement de l'ensemble à un quelconque support, également non représenté.

Suivant la variante de réalisation représentée sur les figures 5 et 6, l'un au moins des angles principaux de la plaque 13A supérieure, et, en pratique, chacun de ceux-ci, est abattu par un bord tombé 24, par lequel cette plaque 13A supérieure est localement au contact de la plaque 13B inférieure, et par lequel elle se trouve localement solidarisée à celle-ci par un point de soudage 25.

Au montage, il est ainsi assuré une première liaison entre les plaques 13A, 13B, avant celle due aux rivets 22, ce qui facilite ce montage.

En outre, les points de jonction intervenant ainsi entre les deux plaques 13A, 13B sont avantageusement susceptibles de minimiser ces vibrations dont celles-ci peuvent être l'objet en service, en formant alors des points d'arrêt entre elles.

Bien entendu, au lieu de venir de la plaque 13A supérieure, les bords tombés 24 correspondants peuvent venir de la plaque 13B supérieure.

La présente invention ne se limite d'ailleurs pas aux formes de réalisation décrites et représentées, mais, dans le cadre des revendications, elle englobe au contraire toute variante d'exécution, notamment en ce qui concerne le nombre, la configuration et/ou la disposition des plots de friction.

De même, on ne sortirait évidemment pas du domaine de l'invention en remplaçant les languettes de la plaque inférieure par des goupilles ou pions, qui, traversant, en position excentrée, cette plaque inférieure, en étant dûment solidarisés à celle-ci, pénètreraient dans les évidements prévus à cet effet à la surface inférieure des plots de friction.

## Revendications

1. Garniture de frein du genre comportant au moins un plot de friction (11) présentant à sa base une collerette de retenue (12) par laquelle il est pris entre deux plaques formant conjointement un support (13), à savoir, une plaque (13A) supérieure, qui présente pour son passage une ouverture (14) de dimensions inférieures à celles de sa collerette de retenue (12), et une plaque (13B) inférieure qui le contrebute au moins localement, avec, associés à ce plot de friction (11), des moyens de blocage qui, dissociés de sa collerette de retenue (12), le bloquent en rotation sur l'une et/ou l'autre des plaques (13A, 13B), caractérisée en ce que les moyens de blocage du plot de friction (11) sont solidaires de la plaque (13B) inférieure, ces moyens de blocage comportant au moins une languette (15), qui, en saillie sur la plaque (13B) inférieure, est engagée dans un évidement (16) prévu à cet effet, en creux, et en position excentrée, sur la surface inférieure (17) du plot de friction (11).

2. Garniture de frein suivant la revendication 1, caractérisée en ce que, formée à la faveur d'un crevé (18) de la plaque (13B) inférieure, la languette (15) est d'un seul tenant avec celle-ci.

3. Garniture de frein suivant l'une quelconque des revendications 1, 2, caractérisée en ce que la hauteur (H3) de l'évidement (16) du plot de friction (11) à compter de la surface inférieure (17) de celui-ci est supérieure à la somme de la hauteur (H1) de sa collerette de retenue (12) et de l'épaisseur (H4) de la plaque (13A) supérieure.

4. Garniture de frein suivant l'une quelconque des revendications 1 à 3, caractérisée en ce que la plaque (13A) supérieure est plane en tout point de sa surface.

5. Garniture de frein suivant l'une quelconque des revendications 1 à 4, caractérisée en ce que la collerette de retenue (12) du plot de friction (11) est circulairement continue et de hauteur (H1) constante tout au long de son contour.

6. Garniture de frein suivant l'une quelconque des revendications 1 à 5, caractérisée en ce que la collerette de retenue (12) du plot de friction (11) est d'un seul tenant avec celui-ci.

7. Garniture de frein suivant l'une quelconque des revendications 1 à 5, caractérisée en ce que la collerette de retenue (12) du plot de friction (11) appartient à une bague (20) solidaire de celui-ci.

8. Garniture de frein suivant l'une quelconque des revendications 1 à 7, caractérisée en ce que, au moins autour de l'ouverture (14) qu'elle présente pour le passage du plot de friction (11), la plaque (13A) supérieure est plane.

9. Garniture de frein suivant l'une quelconque des revendications 1 à 8, caractérisée en ce que, abstraction faite de la languette qu'elle forme, la plaque (13B) inférieure est plane.

10. Garniture de frein suivant l'une quelconque des revendications 1 à 9, caractérisée en ce que les deux plaques (13A, 13B) sont de place en place reliées l'une à l'autre par des rivets (21) dont chacun est entouré par une douille entretoise (22) de hauteur (H2) sensiblement égale à celle (H1) de la collerette de retenue (12) du plot de friction (11) tout en étant légèrement inférieure à cette hauteur (H1).

11. Garniture de frein suivant l'une quelconque des revendications 1 à 10, caractérisée en ce qu'elle présente, à distance les uns des autres, plusieurs plots de friction (11).

## Patentansprüche

1. Bremsbelag der Art, umfassend wenigstens einen Reibungsblock bzw. - klotz (11), der an seiner Basis einen Rückhalterand bzw. -kragen (12) aufweist, durch welchen er zwischen zwei Platten gehalten ist, die gemeinsam einen Support (13) ausbilden, nämlich einer oberen Platte (13A), welche für seinen Durchgang eine Öffnung (14) mit kleineren Abmessungen als jene des Rückhalterands (12) aufweist, und eine untere Platte (13B), die ihn wenigstens lokal ab- bzw. unterstützt, mit diesem Reibungsblock bzw. -klotz (11) zugeordneten Blockierungselementen, die getrennt von seinem Rückhalterand (12) ihn bezüglich einer Rotation auf der einen und/oder der anderen der Platten (13A, 13B) blockieren, dadurch gekennzeichnet, daß die Blockierungselemente des Reibungsblocks bzw. -klotzes (11) einstückig mit der unteren Platte (13B) ausgebildet sind, wobei diese Blockierungselemente wenigstens eine Lasche bzw. Zunge (15) umfassen, die vorragend über die untere Platte (13B) in eine für diesen Zweck vertieft und in exzentrischer Position vorgesehenen Ausnehmung (16) auf der unteren Oberfläche (17) des Reibungsblocks bzw. -klotzes (11), eingreift.

2. Bremsbelag nach Anspruch 1, dadurch gekennzeichnet, daß aufgrund eines Einschnitts (18) der unteren Platte (13B) die Zunge bzw. Lasche (15) einstückig mit dieser ausgebildet ist.

3. Bremsbelag nach einem der Ansprüche 1 oder 2, dadurch gekennzeichnet, daß die Höhe (H3) der Ausnehmung (16) des Reibungsblocks bzw. - klotzes (11) in bezug auf die untere Oberfläche (17) desselben größer als die Summe der Höhe (H1) seines Rückhaltesrands (12) und der Dicke (H4) der oberen Platte (13A) ist.

4. Bremsbelag nach einem der Ansprüche 1 bis 3, dadurch gekennzeichnet, daß die obere Platte (13A) in jedem Punkt ihrer Oberfläche eben ist.

5. Bremsbelag nach einem der Ansprüche 1 bis 4, dadurch gekennzeichnet, daß der Rückhalterand (12) des Reibungsblocks bzw. -klotzes (11) über seinen gesamten Umfang durchgehend kreisförmig und mit konstanter Höhe (H1) ausgebildet ist.

6. Bremsbelag nach einem der Ansprüche 1 bis 5, dadurch gekennzeichnet, daß der Rückhalterand (12) des Reibungsblocks bzw. -klotzes (11) einstückig bzw. integral mit diesem ausgebildet ist.

7. Bremsbelag nach einem der Ansprüche 1 bis 5, dadurch gekennzeichnet, daß der Rückhalterand (12) des Reibungsblocks bzw. -klotzes (11) zu einem gemeinsam mit diesem ausgebildeten Ring (20) gehört.

8. Bremsbelag nach einem der Ansprüche 1 bis 7, dadurch gekennzeichnet, daß die obere Platte (13A) wenigstens um die Öffnung (14), welche sie für den Durchgang des Reibungsblocks bzw. -klotzes (11) aufweist, eben ist.

9. Bremsbelag nach einem der Ansprüche 1 bis 8, dadurch gekennzeichnet, daß die untere Platte (13B) abgesehen von der durch sie ausgebildeten Zunge bzw. Lasche eben ist.

10. Bremsbelag nach einem der Ansprüche 1 bis 9, dadurch gekennzeichnet, daß die zwei Platten (13A, 13B) hier und dort eine mit der anderen durch Nieten (21) verbunden sind, von welchen jede von einer Blindbuchse (22) mit einer im wesentlichen gleichen Höhe (H2) wie jene (H1) des Rückhalterands (12) des Reibungsblocks bzw. -klotzes (11) umgeben ist, welche jedoch geringfügig kleiner als die Höhe (H1) ist.

11. Bremsbelag nach einem der Ansprüche 1 bis 10, dadurch gekennzeichnet, daß er in Abstand voneinander mehrere Reibungsblöcke bzw. -klötze (11) aufweist.

## Claims

1. A brake lining of the type comprising at least one friction stud (11) having at its base a retaining flange (12) by which it is held between two plates jointly forming a support (13), i.e. an upper plate (13A), which for its passage has an opening (14) of smaller dimensions than those of its retaining flange (12), and a lower plate (13B) which supports it at least locally, having, associated with this friction stud (11), locking means which, when separated from its retaining flange (12), lock it against rotation on one and/or other of the plates (13A,13B), characterised in that the locking means of the friction stud (11) are attached to the lower plate (13B), these locking means comprising at least one tongue (15) which, projecting from the lower plate (13B), is engaged in a hollow recess (16) provided for this purpose and in an eccentric position on the lower surface (17) of the friction stud (11).

2. A brake lining according to claim 1, characterised in that the tongue (15), which is formed by means of a bent portion (18) from the lower plate (13B), is integral therewith.

3. A brake lining according to either one of claims 1 and 2, characterised in that the height (H3) of the recess (16) in the friction stud (11), as from the lower surface (17) thereof, is greater than the sum of the height (H1) of its retaining flange (12) and the thickness (H4) of the upper plate (13A).

4. A brake lining according to any one of claims 1 to 3, characterised in that the upper plate (13A) is flat over its entire surface.

5. A brake lining according to any one of claims 1 to 4, characterised in that the retaining flange (12) of the friction stud (11) is peripherally continuous and of a constant height (H1) along its entire contour.

6. A brake lining according to any one of claims 1 to 5, characterised in that the retaining flange (12) of the friction stud (11) is integral therewith.

7. A brake lining according to any one of claims 1 to 6, characterised in that the retaining flange (12) of the friction stud (11) belongs to a collar (20) attached thereto.

8. A brake lining according to any one of claims 1 to 7, characterised in that, at least around the opening (14) with which it is provided for the passage of the friction stud (11), the upper plate (13A) is flat.

9. A brake lining according to any one of claims 1 to 8, characterised in that, apart from the tongue which it forms, the lower plate (13B) is flat.

10. A brake lining according to any one of claims 1 to 9, characterised in that the two plates (13A,13B) are connected at intervals to one another by rivets (21), each of which is surrounded by a spacer bush (22) of a height (H2) which is substantially equal to that (H1) of the retaining flange (12) of the friction stud (11), while being slightly less than this height (H1).

11. A brake lining according to any one of claims 1 to 10, characterised in that it has a plurality of friction studs (11) spaced apart from one another.
